# EUROPEAN PATENT APPLICATION

(11) **EP 4 344 536 A1**
(43) Date of publication of application: **03.04.2024**
(21) Application number: 23197491.6
(22) Date of filing: 14.09.2023
(51) Int. Cl.: A01K 1/00, F16B 7/04

(54) **CUBICLE SYSTEM**

(30) Priority: 16.09.2022 GB 202213647
(71) Applicant: Teemore Engineering Limited, Enniskillen Fermanagh BT92 9BL (GB)
(72) Inventor: Wilson, Colin, Enniskillen, BT92 9BL (GB)
(74) Representative: Murgitroyd & Company

(57) **Abstract**

A cubicle system 1 for partitioning an area. The cubicle system 1 comprises: at least one rail 2; and at least one attachment bracket 3 for attaching the at least one rail 2 to a structure. The at least one attachment bracket 3 comprises a support means for providing internal support to the rail and a rail connection means for securing, attaching and/or connecting the rail 2 to the at least one attachment bracket 3, wherein the rail connection means is configured to be locatable on an outer surface of the rail 2, in use.

## Description

The present invention relates to a cubicle system. In particular, the present invention relates to a cubicle system for housing animals such as cattle.

### Introduction

When housing animals in a building such as an outhouse or cattle shed it is often desirable to partition the available area into individual stalls. Typically, tubular steel rails are used to define the boundaries of the individual stalls. The tubular steel rails are usually mounted on the floor or walls of the building and held in place by suitable fixings. When using prior art systems it is often found that such rails and fixings cannot withstand continued use and require constant maintenance. For example, animals housed in the stalls will often lean against or bump into the steel rails. Such contact between the rails and animals can cause injuries to the animals and/or damage to the steel rails and associated fixings. The impact of these injuries can be significant in dairy cattle farming where there is a clear trend towards larger and heavier cows, and where the comfort, health and wellbeing of the cows is of the utmost importance. Constant maintenance and upkeep is needed to maintain the structural integrity of the individual stalls and to ensure high standards of animal welfare.

There is therefore a need for a way to house animals which provides a lower risk of injury to the animals.

### Objects of the invention

It is an object of the invention to solve the aforementioned problems. In particular, it is an object of the invention to provide an improved way to house animals. It is a further object of the invention to provide an improved cubicle system and an improved method for installing a cubicle system. It is a further object of the invention to provide improved way of mounting and securing the parts of a cubicle system. It is a further object of the invention to provide a cubicle system requiring less maintenance and which can house animals while presenting a lower risk of injury to the animals. It is a further object of the invention to provide a cubicle system which can be easily installed.

### Summary of the invention

According to a first aspect of the invention there is provided a cubicle system for partitioning an area, the cubicle system comprising: at least one rail; and at least one attachment bracket for attaching the at least one rail to a structure, wherein the at least one attachment bracket comprises a support means for providing internal support to the rail and a rail connection means for securing, attaching and/or connecting the rail to the at least one attachment bracket, wherein the rail connection means is configured to be locatable on an outer surface of the rail, in use. Advantageously, the attachment bracket can be easily fixed to a rail without the need for extra lengths of tube since the support means is already provided by the bracket.

Preferably the cubicle system is an installed cubicle system.

Preferably the cubicle system is in an installed configuration.

Preferably the at least one attachment bracket is attached to the structure. Preferably the structure is a post.

Preferably the structure is a post having a circular or square cross section. Optionally the structure comprises a floor attachment plate.

Preferably the structure is a post which extends in a vertical or substantially vertical direction.

Optionally the structure is a post which extends in a horizontal or substantially horizontal direction.

Optionally the structure is a wall or floor of a building.

Preferably two attachment brackets are attached to the structure.

Preferably two attachment brackets are attached to the rail.

Preferably the at least one rail is a loop.

Preferably the at least one rail comprises an upper rail portion.

Preferably the at least one rail comprises a lower rail portion.

Preferably the at least one rail comprises a curved rail portion.

Preferably the curved rail portion comprises one or more corner portions.

Preferably the curved rail portion comprises one or more straight or substantially straight portions.

Preferably the rail comprises an upper rail portion connected to a lower rail portion.

Preferably the rail is a flexible unitary plastic member.

Preferably the rail is a flexible unitary plastic member for a cubicle system.

Preferably the rail does not include steel.

Preferably the rail does not include any integral internal supporting members, such as integral internal steel supports.

Preferably the rail does not include any external integral supporting members, such as integral external steel supports.

Preferably the at least one rail comprises an upper rail portion, a lower rail portion and a curved rail portion.

Preferably the upper rail portion is connected to the lower rail portion via the curved rail portion.

Preferably the at least one rail comprises at least one open end.

Preferably the at least one rail comprises a plurality of open ends.

Preferably the at least one rail comprises two open ends.

Preferably the at least one rail comprises one or more holes for receiving one or more fixing means.

Preferably the fixing means comprise screws, nuts and/or bolts.

Preferably the at least one rail is a hollow tube.

Preferably the at least one rail has a circular cross section.

Preferably the at least one rail is flexible.

Preferably the at least one rail is resilient.

Preferably the at least one rail is at least partially formed from a flexible and/or resilient material.

Preferably the at least one rail is at least partially formed from a plastic material, for example polyethylene, polypropylene or PTFE.

Preferably the at least one rail comprises a plastic material, for example polyethylene, polypropylene or PTFE.

Preferably the at least one rail is a plastic tube.

Preferably the at least one rail is a polyethylene tube, a polypropylene tube or a PTFE tube.

Preferably the cubicle system comprises a plurality of rails.

Preferably the cubicle system comprises a plurality of identical rails.

Preferably the at least one attachment bracket is formed from a rigid material, such as metal or steel, for example mild steel or galvanised steel.

Preferably the at least one attachment bracket is formed of at least two parts.

Preferably the at least one attachment bracket is formed of at least two separable parts.

Optionally the at least one attachment bracket is formed of three or more parts. Preferably the parts are separable.

Preferably the parts are attachable, in use.

Preferably each part of the at least one attachment bracket is formed from a rigid material, such as metal.

Preferably the at least one attachment bracket comprises at least a first part.

Preferably a first part comprises the support means.

Preferably the at least one attachment bracket comprises at least a second part.

Preferably the at least one attachment bracket comprises at least a first part and a second part.

Preferably the at least one attachment bracket comprises at least a first part and a second part, and wherein the first part and the second part are attachable, in use.

Optionally the at least one attachment bracket is formed of a single part.

Optionally the at least one attachment bracket is a unitary component.

Preferably the support means is adapted to fit within at least a part of the rail.

Preferably the support means is adapted to fit within an open end of the rail.

Preferably the support means is a locator tube.

Preferably the support means is a locator tube adapted to fit within at least a part of the rail.

Preferably the support means is a locator tube adapted to fit within the rail at an open end of the rail.

Preferably the outer diameter of the locator tube is smaller than the inner diameter of the rail. Advantageously, the locator tube can be accommodated within the rail to provide internal support to the rail at the position where it is attached to the attachment bracket.

Optionally the at least one attachment bracket comprises one support means.

Optionally the at least one attachment bracket comprises a plurality of support means.

Optionally the at least one attachment bracket comprises two support means.

Preferably the cubicle system comprises a plurality of attachment brackets for each rail.

Preferably the cubicle system comprises at least two attachment brackets for each rail.

Preferably the cubicle system comprises exactly two attachment brackets for each rail.

Optionally the cubicle system comprises exactly two attachment brackets for each pair of rails.

Preferably the at least one attachment bracket comprises a rail connection means.

Preferably the at least one attachment bracket comprises a rail connection means for securing, attaching and/or connecting the rail to the attachment bracket.

Preferably the rail connection means comprises a clamping means.

Preferably the clamping means is configured to be locatable on the outer surface of the rail, in use.

Preferably the rail is locatable between the support means and the clamping means, in use.

Preferably an open end of the rail is locatable over the support means and within the clamping means, in use.

Preferably the clamping means comprises two opposing clamping members.

Preferably the clamping means comprises two opposing clamping members configured to be pushed together, in use.

Preferably the clamping means comprises two opposing clamping members configured to be pushed towards the support means, in use

Preferably each clamping member comprises a clamping surface.

Preferably each clamping member comprises a curved or flat clamping surface. Optionally each clamping member comprises a semi-cylindrical clamping surface.

Preferably each clamping member comprises a clamping surface having a constant cross-section along a first direction.

Preferably the first direction is parallel to the direction in which the support means extends.

Preferably the first direction is parallel to a part of the rail.

Preferably the clamping means is configured to allow the clamping members to be pushed together, in use. Advantageously, the clamping means can be used to clamp the rail onto the outer surface of the support means, providing secure attachment of these components.

Preferably the at least one attachment bracket comprises one or more holes for receiving one or more fixing means, such as screws, nuts and/or bolts. Advantageously, the one or more fixing means can be used to push the clamping members together, in use.

Preferably the first part comprises one or more holes for receiving one or more fixing means.

Preferably the fixing means comprise screws, nuts and/or bolts.

Preferably the second part comprises one or more holes for receiving one or more fixing means.

Preferably the support means comprises one or more holes for receiving one or more fixing means.

Preferably the first part and the second part comprise one or more corresponding holes for receiving one or more fixing means.

Preferably the attachment bracket comprises a stop means.

Preferably the attachment bracket comprises a stop means for limiting the distance that the support means can pass into the rail, in use.

Preferably the first part comprises the support means.

Preferably the first part comprises a stop means.

Preferably the first part comprises a stop means for limiting the distance that the support means can pass into the rail, in use.

Preferably the at least one attachment bracket comprises a securement means.

Preferably the at least one attachment bracket comprises a securement means for securing, attaching and/or connecting the at least one attachment bracket to the structure.

Preferably the securement means is adapted to secure, attach and/or connect the at least one attachment bracket to a post.

Preferably the securement means is adapted to connect the at least one attachment bracket to a cylindrical post.

Optionally the securement means is adapted to connect the at least one attachment bracket to a square post.

Preferably the securement means is adapted to connect the at least one attachment bracket to a post which extends in a vertical, substantially vertical, horizontal or substantially horizontal direction.

Preferably the securement means comprises a further clamping means.

Preferably the further clamping means is configured to be locatable over the outer surface of a post, in use.

Preferably the further clamping means comprises two opposing further clamping members.

Preferably each clamping member of the further clamping means comprises a clamping surface.

Preferably each clamping member of the further clamping means comprises a curved or flat clamping surface.

Preferably each clamping member of the further clamping means comprises a semi-cylindrical clamping surface.

Preferably each clamping member of the further clamping means comprises a clamping surface having a constant cross-section along a second direction.

Preferably the second direction is parallel to the direction in which the post extends.

Preferably the second direction is perpendicular to the first direction.

Preferably the second direction is perpendicular to a part of the rail.

Preferably the further clamping means is configured to allow the further clamping members of the further clamping means to be pushed together, in use. Advantageously, the further clamping means can be used to clamp the at least one attachment bracket onto the outer surface of the post, providing secure attachment of these components.

Preferably the at least one attachment bracket comprises one or more holes for receiving one or more fixing means, such as screws, nuts and/or bolts. Advantageously, the one or more fixing means can be used to push the clamping members together, in use.

Optionally the securement means is adapted to secure, attach and/or connect the at least one attachment bracket to a substantially flat surface.

Optionally the connection means is adapted to secure, attach and/or connect the at least one attachment bracket to a wall or floor of a building.

Optionally the securement means comprises a plate.

Preferably the securement means comprises one or more holes for receiving one or more fixing means, such as screws, nuts and/or bolts.

Optionally the securement means comprises a post.

Optionally the securement means comprises a post having a cylindrical or square cross section.

Optionally the securement means comprises a post to which the rail connection means is attached, for example via welding,

Optionally the securement means comprises a post to which the support means is attached, for example via welding,

Preferably the cubicle system comprises at least one headrail.

Preferably the cubicle system comprises a plurality of headrails.

Preferably the cubicle system comprises at least one headrail for supporting the rail.

Preferably the cubicle system comprises at least one headrail for attaching the rail to an adjacent rail.

Preferably the cubicle system comprises at least one headrail for attaching the rail to a plurality of further rails.

Preferably the at least one headrail is a hollow tube.

Preferably the at least one headrail has a circular cross section.

Preferably the at least one headrail is at least partially formed from a rigid material. Optionally the at least one headrail is at least partially formed from a plastic material and/or a flexible material.

Preferably the at least one headrail comprises a rigid material, such as metal or steel, for example mild steel or galvanised steel.

Optionally the at least one headrail is at least partially formed from a plastic material and/or a flexible material such as polyethylene, polypropylene or PTFE.

Preferably the cubicle system comprises at least one headrail bracket for attachment to the headrail.

Preferably the cubicle system comprises at least one headrail bracket for attachment to the rail.

Preferably the cubicle system comprises at least one headrail bracket for attaching the headrail to the rail.

Preferably the headrail bracket comprises a first half bracket.

Preferably the first half bracket is adapted to receive a headrail which extends along a primary direction.

Preferably the headrail bracket comprises a second half bracket.

Preferably the second half bracket is adapted to receive a rail which extends along a secondary direction.

Preferably the primary direction is perpendicular to the secondary direction. Preferably the first half bracket is connectable to the second half bracket.

Preferably the first half bracket comprises one or more holes for receiving one or more fixing means, such as screws, nuts and/or bolts.

Preferably the second half bracket comprises one or more holes for receiving one or more fixing means, such as screws, nuts and/or bolts.

Preferably the first half bracket and the second half bracket comprise one or more corresponding holes for receiving one or more fixing means.

Preferably the first half bracket and the second half bracket comprise one or more corresponding holes for receiving one or more fixing means.

Preferably the at least one headrail bracket comprises a shim.

Preferably the shim is a floating curved shim.

Preferably the shim is locatable between the first half bracket and the second half bracket, in use.

Preferably the first half bracket, second half bracket and/or shim are formed from a rigid material, such as metal or steel, for example mild steel or galvanised steel.

According to a further aspect of the invention there is provided a cubicle system for partitioning an area, the cubicle system comprising: at least one rail; and at least one attachment bracket for attaching the at least one rail to a structure, wherein the at least one attachment bracket comprises a support means for providing internal support to the rail. Advantageously, the attachment bracket is easily fixed to a rail without the need for extra lengths of tube since the support means is already provided by the bracket.

According to a further aspect of the invention there is provided an installed cubicle system comprising at least one rail attached to an attachment bracket; and at least one attachment bracket attached to a structure. Advantageously, the invention provides an improved way to house animals i.e. an improved cubicle system.

According to a further aspect of the invention there is provided a cubicle system for partitioning an area, the cubicle system comprising a hollow plastic rail and at least two attachment brackets for attaching the rail to a structure, wherein each attachment bracket comprises: a support means for providing internal support to the rail; a rail connection means for securing, attaching and/or connecting the attachment bracket to the rail; and a securement means for securing, attaching and/or connecting the attachment bracket to the structure. Advantageously, the invention provides a cubicle system which can house animals while presenting a lower risk of injury to the animals.

According to a further aspect of the invention there is provided a method for partitioning an area, the method comprising: providing a cubicle system according to any preceding claim; attaching the at least one attachment bracket to a structure; and attaching the at least one rail to the at least one attachment bracket. Advantageously, the invention provides a cubicle system requiring less maintenance.

According to a further aspect of the invention there is provided an attachment bracket for attaching a rail to a structure, the attachment bracket comprising: a support means for providing internal support to the rail; and a rail connection means for securing, attaching and/or connecting the attachment bracket to the rail, wherein the rail connection means is configured to be locatable on an outer surface of the rail, in use. Advantageously, the invention provides an improved way of mounting and securing a rail of a cubicle system to a structure.

According to a further aspect of the invention there is provided a headrail bracket for attaching a headrail to a rail, the headrail bracket comprising: a first half bracket adapted to receive a headrail which extends in a first direction; a second half bracket adapted to receive a rail which extends in a second direction; and a shim, wherein the shim is locatable between the first half bracket and the second half bracket, in use. Advantageously, the invention provides an improved way of securing the rails of a cubicle system to a headrail bracket.

According to a further aspect of the invention there is provided a rail for partitioning an area, the rail comprising an upper rail portion connected to a lower rail portion, wherein the rail is a flexible unitary plastic member for a cubicle system and wherein the rail comprises at least one open end adapted to receive a support means of an attachment bracket. Advantageously, the rail itself does not need to be provided with any internal or external supporting members, such as internal or external steel supports, since adequate internal support can be provided by the attachment bracket. This means that the rail is easier to manufacture and can be made from thinner plastic.

According to a further aspect of the invention there is provided a kit of parts comprising at least one attachment bracket and at least one rail. Advantageously, the invention provides a kit of parts for forming a cubicle system which can be easily installed.

According to a further aspect of the invention there is provided a kit of parts comprising at least two attachment brackets, at least one rail, at least one headrail bracket and at least one headrail. Advantageously, the invention provides a kit of parts for forming a cubicle system which can be easily installed.

### Brief description of the drawings

The invention will now be described by way of non-limiting example, with reference being made to the accompanying drawings, in which:
Figure 1 is an exploded perspective view of a cubicle system according to an aspect of the invention.
Figure 2 is a perspective view of a cubicle system according to an aspect of the invention.
Figure 3 is a side view of a cubicle system according to an aspect of the invention.
Figure 4 is a perspective view of a rail or loop.
Figure 5 shows an end view and a cross-sectional side view of the rail or loop of figure 4.
Figure 6 is an exploded perspective view of a first example attachment bracket according to an aspect of the invention.
Figure 7 is a perspective view of the attachment bracket of figure 6.
Figure 8 shows top and end views of the attachment bracket of figure 6.
Figure 9 is a side view of the attachment bracket of figure 6.
Figure 10 is an exploded perspective view of a second example attachment bracket according to an aspect of the invention.
Figure 11 is a perspective view of the attachment bracket of figure 10.
Figure 12 shows top and end views of the attachment bracket of figure 10.
Figure 13 is a side view of the attachment bracket of figure 10.
Figure 14 is an exploded perspective view of a third example attachment bracket according to an aspect of the invention.
Figure 15 is a perspective view of the attachment bracket of figure 14.
Figure 16 shows top and end views of the attachment bracket of figure 14.
Figure 17 is a side view of the attachment bracket of figure 14.
Figure 18 is a perspective view of a fourth example attachment bracket according to an aspect of the invention.
Figure 19 is an end view of the attachment bracket of figure 18.
Figure 20 shows side views of the attachment bracket of figure 18.
Figure 21 is an exploded perspective view of a headrail bracket according to an aspect of the invention.
Figure 22 is a perspective view of the headrail bracket of figure 21.
Figure 23 is a top view of the headrail bracket of figure 21.
Figure 24 is a side view of the headrail bracket of figure 21.
Figure 25 is a further side view of the headrail bracket of figure 21.
Figure 26 is a perspective view of a cubicle system according to an aspect of the invention.
Figure 27 is a perspective view of a further example attachment bracket according to an aspect of the invention.
Figure 28 shows two example support structures suitable for use with aspects of the present invention.
Figure 29 is a perspective view of a cubicle system according to an aspect of the invention.
Figure 30 is a perspective view of a cubicle system according to an aspect of the invention.
Figure 31 is a perspective view of a further example attachment bracket according to an aspect of the invention.
Figure 32 is a perspective view of a cubicle system according to an aspect of the invention.
Figure 33 is a perspective view of a further example attachment bracket according to an aspect of the invention.
Figure 34 is a perspective view of a cubicle system according to an aspect of the invention.
Figure 35 is a perspective view of a further example attachment bracket according to an aspect of the invention.
Figure 36 is a perspective view of a cubicle system according to an aspect of the invention.
Figure 37 is a perspective view of a further example attachment bracket according to an aspect of the invention.
Figure 38 is a perspective view of a cubicle system according to an aspect of the invention.
Figure 39 is a perspective view of a further example attachment bracket according to an aspect of the invention.

### Detailed description

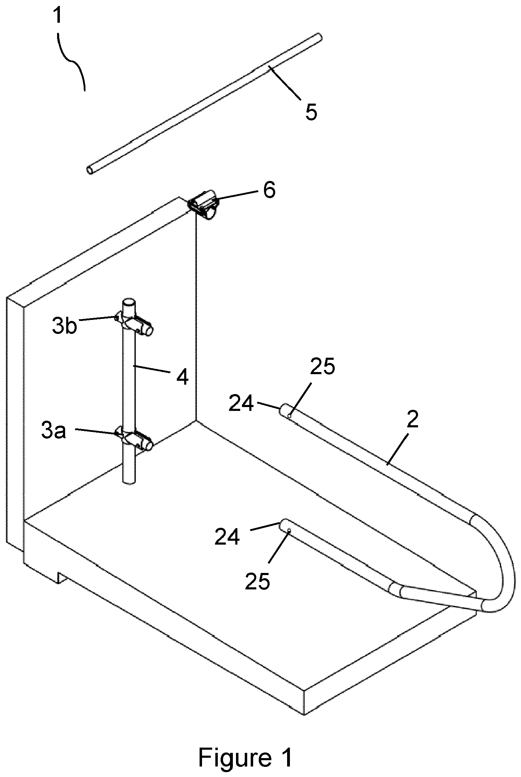

Figure 1 shows an exploded view of a cubicle system 1 according to an aspect of the invention. The cubicle system 1 is adapted for partitioning an area, for example partitioning an animal shed into one or more stalls in which animals may be housed. The cubicle system 1 comprises a rail 2, two attachment brackets 3 for attaching the rail 2 to a structure 4, a headrail 5 and a headrail bracket 6.

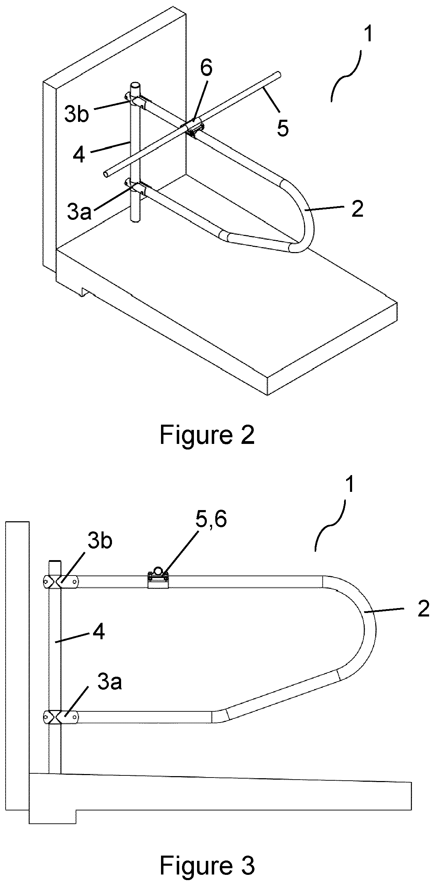

Figures 2 and 3 show perspective and side views of the cubicle system 1 in the installed configuration i.e. where the cubicle system 1 has been installed using the structure 4 as support. In this example the structure 4 is a cylindrical post which extends in a vertical or substantially vertical direction from the ground/floor of a building. In the installed configuration shown in figures 2 and 3, each of the attachment brackets 3 are attached to the structure 4 in a spaced apart arrangement. A lower attachment bracket 3a is attached towards the base of the structure 4 (i.e. adjacent to the ground/floor), and the upper attachment bracket 3b is attached towards the top of the structure 4. The terms 'upper' and 'lower' are intended to refer to in-use positions of components. The attachment brackets 3a and 3b are substantially identical and are provided at the open ends of the rail 2, in use. The distance between the brackets 3a, 3b substantially corresponds to the height of the rail 2. In optional embodiments the structure 4 may instead be a wall or floor of a building and two attachment brackets may be directly attached to the wall or floor.

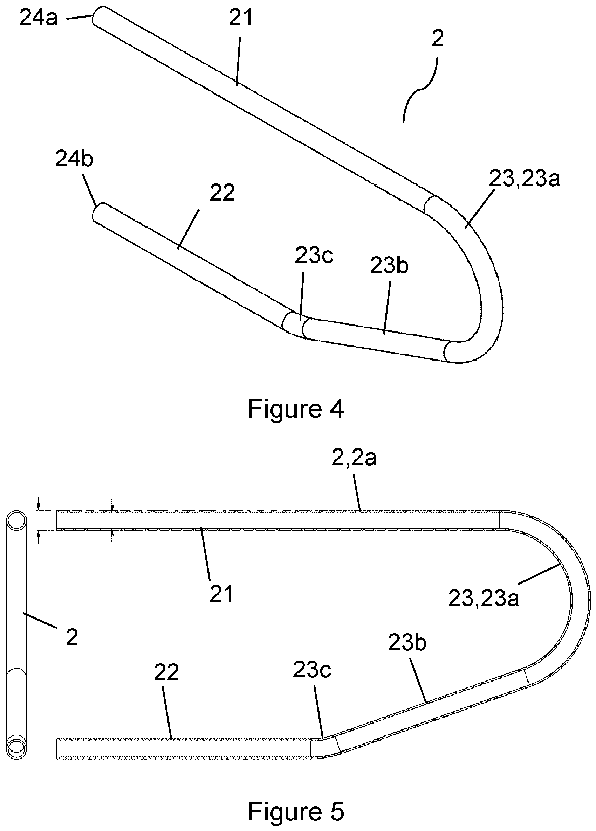

Figures 4 and 5 provide further views of the rail 2. In this embodiment the rail 2 is a loop having an outer diameter of 75 mm, although other diameters may be used. The rail comprises an upper rail portion 21, a lower rail portion 22 and a curved rail portion 23. The curved rail portion 23 connects the upper rail portion 21 to the lower rail portion 22. The curved rail portion 23 comprises two corner portions 23a and 23c and a straight portion 23b. The rail 2 comprises two open ends 24: an upper open end 24a and a lower open end 24b. The rail 2 comprises holes 25 (shown in figure 1) for receiving one or more fixing arrangements in the form of e.g. screws or bolts. The rail 2 is a hollow tube having a circular cross section. As will be appreciated, other cross sections are possible. The rail 2 is a unitary, flexible and resilient tube and is formed from a plastic material such as polyethylene, polypropylene or PTFE.

The rail 2 can be used in partitioning an area and is made from a flexible and resilient plastic material. In the most preferred embodiments the rail 2 is a unitary plastic member. Using only plastic in the rail 2 (i.e. there being no integral steel parts) makes the rail resilient and presents a lower injury risk to animals such as cattle that may lean one and/or bump into the rail 2. As will be appreciated, the rail 2 itself does not need to be provided with any internal or external supporting members, such as integral internal or external steel supports, since adequate internal support can be provided by the attachment bracket 3. This means that the rail 2 is simple to manufacture, is light and can be made from thinner plastic than prior art rails.

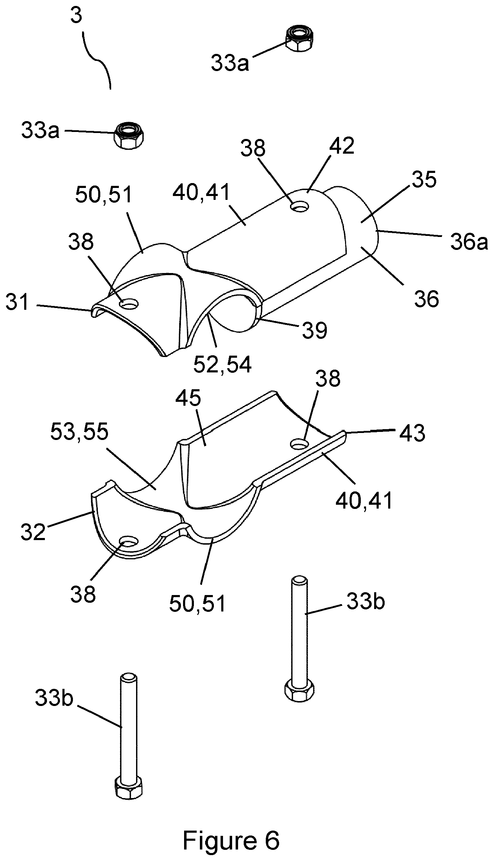

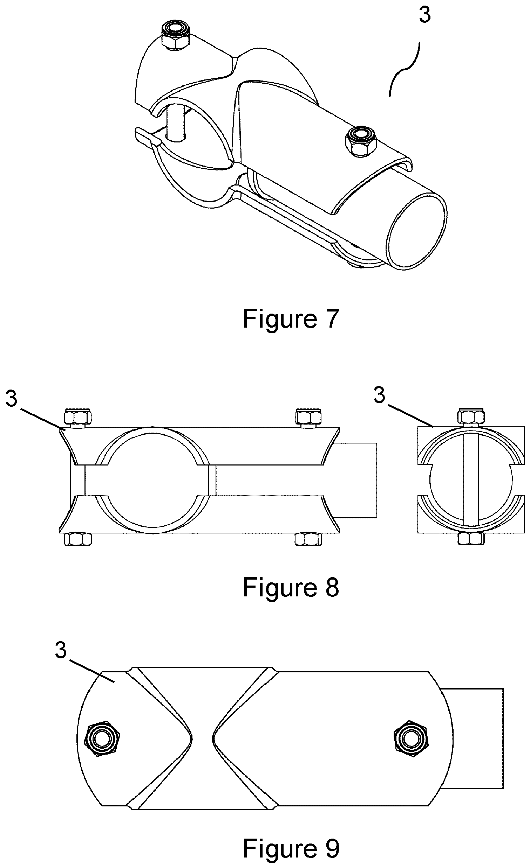

Figures 6 to 9 provide multiple views of a first example attachment bracket 3. Either of the lower and upper attachment brackets 3a and 3b can be identical to the example attachment bracket 3. The attachment bracket 3 comprises a support arrangement 35 for providing internal support to the rail 2. The attachment bracket 3 is formed from a rigid material, such as metal or steel, for example mild steel or galvanised steel. In preferable embodiments the attachment bracket 3 is formed from 5 mm mild steel, and has a galvanised coated finish.

As shown in figure 6, the attachment bracket 3 is formed of two parts: a first part 31 and a second part 32. Each part 31, 32 of the attachment bracket 3 is formed from a rigid material, such as metal or steel, for example mild steel or galvanised steel. In preferable embodiments each part 31, 32 of the attachment bracket 3 is formed from 5 mm mild steel, and has a galvanised coated finish. In use, the first part 31 and the second part 32 are attachable to one another via fixing arrangements in the form of nuts 33a and bolts 33b. The first part 31 and the second part 32 have corresponding holes 38 passing all the way through for receiving the fixing arrangements. For example, the support arrangement 35/locator tube 36 includes aligned holes for allowing a bolt 33b to pass therethrough. In preferable embodiments each of the parts 31 and 32 are unitary members, for example the components of the first part 31 are all welded together. In optional embodiments the support arrangement 35 may be provided separately to the remainder of the attachment bracket 3, as is explained in further detail below.

The support arrangement 35 is a locator tube 36 adapted to fit within the rail 2 at an open end 24 of the rail 2. The locator tube 36 is welded directly into the bracket 3. Having the locator tube 36 welded into the bracket 3 allows for a rigid and stable fixing for the rail 2, to reduce wear of the plastic material of the cubicle at this point of the connection. The bracket 3 reduces the wear and flex on the plastic material of the rail 2 at the point it is clamped, and at its fixed points in the system. The weldedin locator tube 36 give a good solid fixing point to attach the rail 2 and eliminate the need to have e.g. a separate length of steel tube slid in to the ends of the rail 2 to give support. The welded in locator tubes 36 stop the cubicle flexing at the point of connection.

The attachment bracket 3 is easily fixed to the rail 2 without the need for extra lengths of tube since the support arrangement 35 is already welded into the bracket 3. This allows for a faster assembly of the cubicle 1, saves labour costs during installation, and provides a stronger fixing of the plastic cubicle at the post 4.

In the present embodiment the outer diameter of the locator tube 36 is approximately 60 mm, but other outer diameters can be used for example 61 mm, 48 mm, or anywhere in the range of 45-65 mm. The outer diameter of the locator tube 36 is slightly smaller than the inner diameter of the rail 2, allowing the locator tube 36 to be accommodated within the rail 2. When the locator tube 36 is located within the rail 2, the locator tube 36 provides internal support to the rail 2. The locator tube 36 adds strength and rigidity to the flexible rail 2 at the position where it is attached to the attachment bracket 3.

The attachment bracket 3 comprises a rail connection arrangement 40 for securing, attaching and/or connecting the rail 2 to the attachment bracket 3. The rail connection arrangement 40 comprises a clamping arrangement 41 which is configured to be locatable on the outer surface 2a of the rail 2, in use. The clamping arrangement 41 comprises two opposing clamping members 42, 43. Each clamping member 42, 43 comprises a curved clamping surface 44, 45 which is semi-cylindrical. Each clamping surface 44, 45 has a constant cross-section along a direction which is parallel to the direction in which the support arrangement 35, in particular the locator tube 36, extends. Each clamping surface 44, 45 has a constant cross-section along a direction which is parallel to the direction in which the upper and lower rail portions 21, 22 extend in use.

The clamping arrangement 41 is configured to allow the clamping members 42, 43 to be pushed together, in use. The clamping arrangement 41 can be used to clamp the rail 2 onto the outer surface of the support arrangement, in particular the outer surface of the locator tube 36, thereby providing secure attachment of these components.

To attach the rail 2 to the attachment bracket 3, the first part 31 and the second part 32 of the attachment bracket 3 are brought together and an open end 24 of the rail 2 is located over the end of the support arrangement 35, in particular the end 36a of locator tube 36. In this position the open end 24 of the rail 2 will be located between the opposing clamping members 42, 43 of the clamping arrangement 41. The open end 24 of the rail 2 is then pushed fully over the locator tube 36 until it reaches a stop arrangement 39. The stop arrangement 39 limits the distance that the support arrangement 35, particularly the locator tube 36, can pass into the open end 24 of the rail 2. Bolts 33b are passed through the aligned holes 25, 38 in the first part 31, second part 32 and rail 2. The bolts 33b and nuts 33a are tightened to push the clamping members 42, 43 together and thereby securely fix the components together. The support arrangement 35/locator tube 36 prevents the resilient plastic rail 2 from collapsing at the point where the clamping members 42, 43 apply a force to the rail 2.

In optional embodiments the support arrangement 35 can be provided separately to the remainder of the attachment bracket 3. For example, the locator tube 36 may not be attached/welded to the remainder of the attachment bracket 3 and may be separable from the remainder of the first part 31/attachment bracket 3. In such embodiments, the support arrangement 35 may be a steel tube that can be inserted into an open end of the rail 2 before the rail 2 is attached to the remainder of the attachment bracket 3. As will be appreciated, in such embodiments the separable support arrangement 35/locator tube 36 will include aligned holes through which bolts 33 can pass and may include the stop arrangement 39 to prevent the locator tube 36 passing too far into the rail 2. In these optional embodiments, the separable support arrangement 35/locator tube 36 will, in use, provide support to the rail 2 at the point it is clamped by the clamping arrangement 41. In optional embodiments the attachment bracket 3 may be made in three separable parts that are attachable in use: the first part 31; the second part 32; and a separable support arrangement 35/locator tube 36. Alternatively the attachment bracket 3 may be made in two parts: the first part being the separable support arrangement 35/locator tube 36; and the second part being the remainder of the attachment bracket 3 (welded together to form a single piece).

The attachment bracket 3 comprises a securement arrangement 50 for securing, attaching and/or connecting the attachment bracket 3 to the structure 4. In this case the structure 4 is a cylindrical post which extends in a vertical or substantially vertical direction from the ground/floor (see figure 1).

The securement arrangement 50 comprises a clamping arrangement 51. The clamping arrangement 51 is configured to be locatable over the outer surface of the post 4, as shown in e.g. figure 2. The clamping arrangement 51 comprises opposing clamping members 52, 53. Each clamping member 52, 53 comprises a curved clamping surface 54, 55 which is semi-cylindrical. Each clamping surface 54, 55 has a constant cross-section along a direction which is parallel to the direction in which the post 4 extends. Each clamping surface 54, 55 has a constant cross-section along a direction which is perpendicular to the direction in which the support arrangement 35, in particular the locator tube 36, extends.

The clamping arrangement 51 is configured to allow the clamping members 52, 53 to be pushed together, in use. The clamping arrangement 51 can be used to clamp the attachment bracket 3 onto the outer surface of the post 4, thereby providing secure attachment of these components.

To attach the attachment bracket 3 to the post 4, the first part 31 and the second part 32 of the attachment bracket 3 are brought together over the post 4. Bolts 33b are passed through the aligned holes 38 in the first part 31 and second part 32. The bolts 33b and nuts 33a are tightened to push the clamping members 52, 53 together and thereby securely fix the attachment bracket 3 to the post 4. As will be appreciated, the attachment bracket 3 may be fixed to the post 4 before or after the attachment bracket 2 is attached to the rail 2, or at the same time.

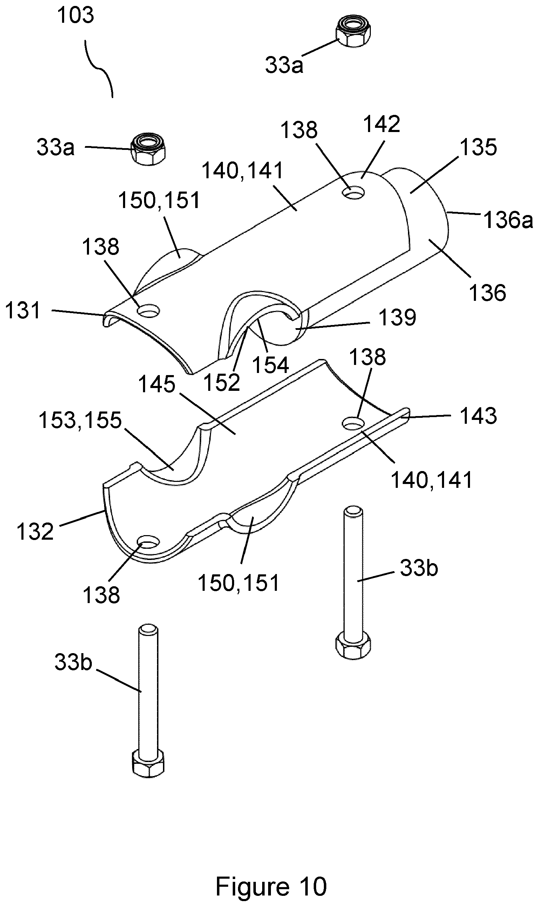

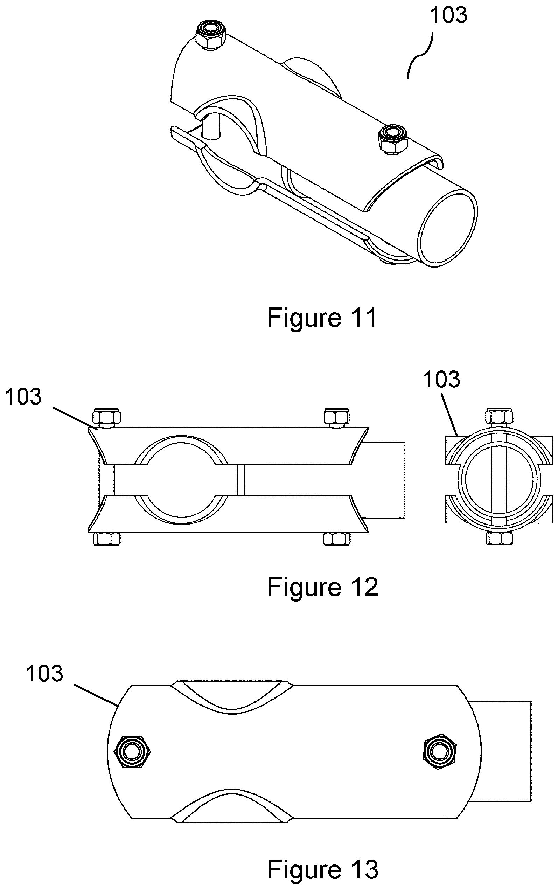

Figures 10 to 13 provide multiple views of a second example attachment bracket 103. Either of the lower and upper attachment brackets 3a and 3b can be identical to the example attachment bracket 103. The attachment bracket 103 is generally similar to the previous example, and can be used in a similar way, with similar numerals denoting similar features.

The second example attachment bracket 103 is distinguished from the previous example bracket 3 by the securement arrangement 150, in particular the clamping arrangement 151. Each clamping member 152, 153 comprises two curved clamping surfaces 154, 155 which are semi-cylindrical and have a smaller diameter than the clamping surfaces 54, 55 of the first example attachment bracket 3. This allows the bracket 103 to be used with structures (e.g. posts) having a smaller diameter. In optional embodiments the support arrangement 135 may be provided separately to the remainder of the attachment bracket 103, in the manner outlined above.

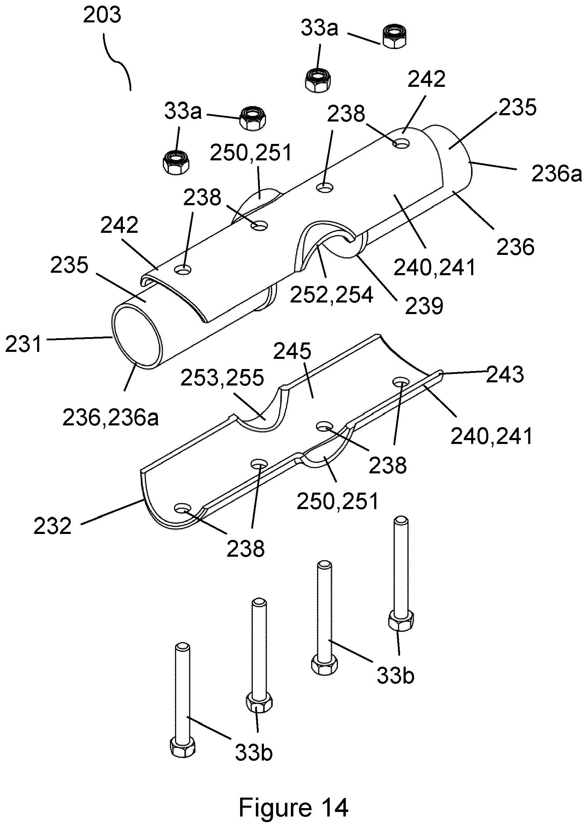

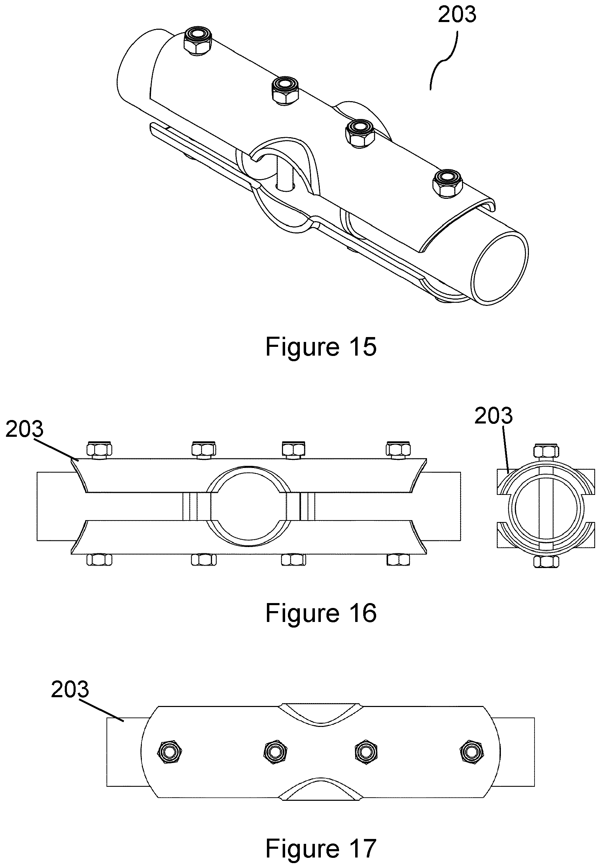

Figures 14 to 17 provide multiple views of a third example attachment bracket 203. Either of the lower and upper attachment brackets 3a and 3b can be identical to the example attachment bracket 203. The attachment bracket 203 is generally similar to the previous examples, and can be used in a similar way, with similar numerals denoting similar features.

The third example attachment bracket 203 is distinguished from the previous example brackets 3,103 by there being two support arrangements 235 on either side of the bracket 203. This allows the attachment bracket 203 to be used in attaching two rail portions 2 to a structure such as a post. Furthermore, four holes 238 are provided in each of the first and second parts 231, 232 to accommodate four bolts 33b. As will be appreciated, each rail portion 2 will be attached to the attachment bracket 203 via two bolts 33b, each rail portion 2 therefore requiring two spaced apart holes proximal to each open end 24 thereof. In optional embodiments the support arrangements 235 may be provided separately to the remainder of the attachment bracket 203, in the manner outlined above.

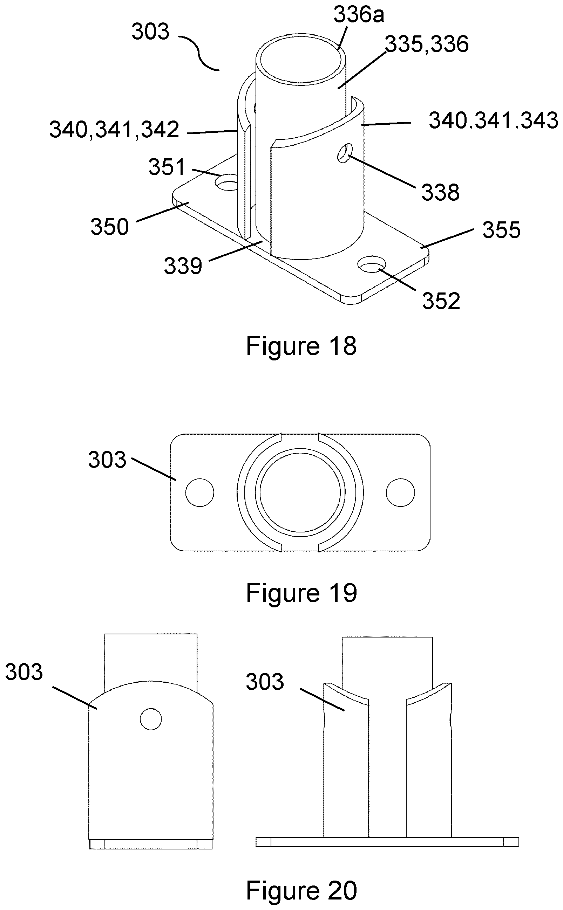

Figures 18 to 20 provide multiple views of a fourth example attachment bracket 303. Either of the lower and upper attachment brackets 3a and 3b can be identical to the example attachment bracket 303. The attachment bracket 303 is generally similar to the previous examples, and can be used in a similar way, with similar numerals denoting similar features.

The fourth example attachment bracket 303 is distinguished from the previous example brackets 3,103,203 by the securement arrangement 350 and by the fact that the bracket is a one-piece unitary bracket. In this case the securement arrangement 350 is a plate 355 which allows the attachment bracket 303 to be attached to a flat surface such as the surface of a wall or floor. The securement arrangement comprises holes 351, 352 through which screws and/or bolts can pass to fix the attachment bracket 303 in place. As will be appreciated, in optional embodiments the securement arrangement 350, in particular the plate 355, may be flat or curved to allow suitable attachment to a flat or curved surface. In optional embodiments the support arrangement 335 may be provided separately to the remainder of the attachment bracket 303, , in the manner outlined above.

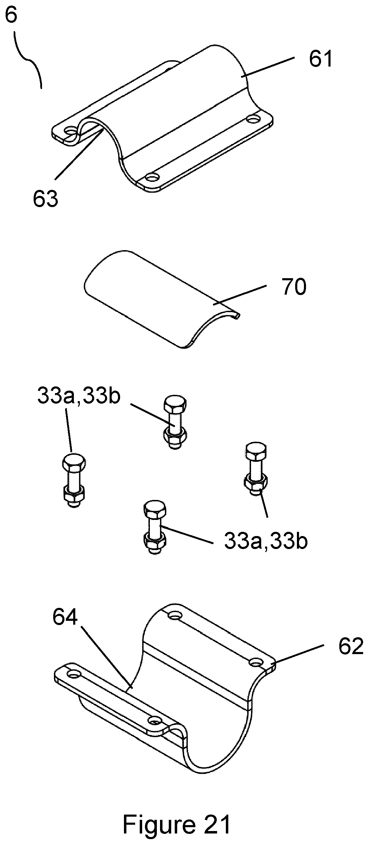

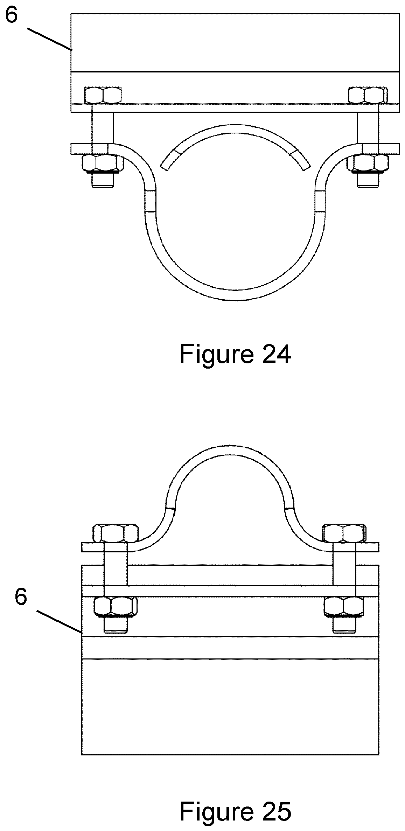

Figures 21 to 25 show in detail the headrail bracket 6. The headrail bracket 6 can be used to attach the headrail 5 to the rail 2. The headrail 5 is a hollow tube having a circular cross section and can be formed from a rigid material, such as mild steel or galvanised steel. In optional embodiments the headrail may be formed from a flexible and/or plastic material, such as polyethylene, polypropylene or PTFE. In preferable embodiments the outer diameter of the headrail is 48 mm. Where the cattle system 1 utilises multiple rails 2, the headrail 5 and headrail bracket 6 provide added strength to the system. As will be appreciated, multiple headrails 5 and/or headrail brackets 6 can be used in the cubicle system 1.

The headrail bracket 6 comprises a first half bracket 61 and a second half bracket 62. The first half bracket 61 is adapted to receive the headrail 5 which extends along a primary direction. The second half bracket 62 is adapted to receive the rail 2 which extends along a secondary direction, the primary direction being perpendicular to the secondary direction.

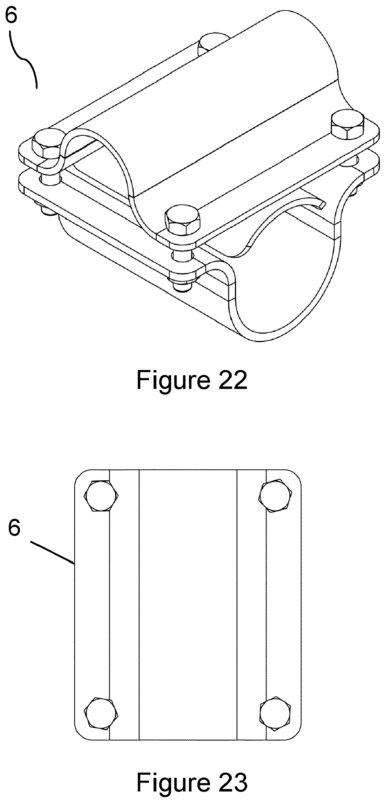

As shown in figures 22 and 23, each of the first half bracket 61 and the second half bracket 62 are generally square and include four holes for receiving fixing arrangements such as bolts. The first half bracket 61 comprises a recess 63 for accommodating the headrail 5. The second half bracket 62 comprises a recess 64 for accommodating the rail 2.

In use, the headrail 5 is accommodated within the recess 63 of the first half bracket 61 and the rail 2 is accommodated within the recess 64 of the second half bracket 62. The first half bracket 61 is then connected to the second half bracket 62 via fixing arrangements such as nuts 33a and bolts 33b. Tightening the nuts and bolts causes the first half bracket 61 to move towards the second half bracket 62 and thereby push the rail 2 and headrail 5 together.

To protect the flexible plastic rail 2 from deformation by the compressive forces of the rigid headrail, a curved shim 70 is provided between the rail 2 and the headrail 5. The shim 70 stops the plastic material of the rail 2 from being deformed by the half brackets 61, 62, and also protects and supports the rail 2 when the cubicle is flexing in its normal operating range.

The first half bracket 61, second half bracket 62 and/or shim 70 are formed from a rigid material, such as metal or steel, for example mild steel or galvanised steel. In preferable embodiments the first half bracket 61, second half bracket 62 and shim 70 are is formed from 5mm mild steel, and have a galvanised coated finish.

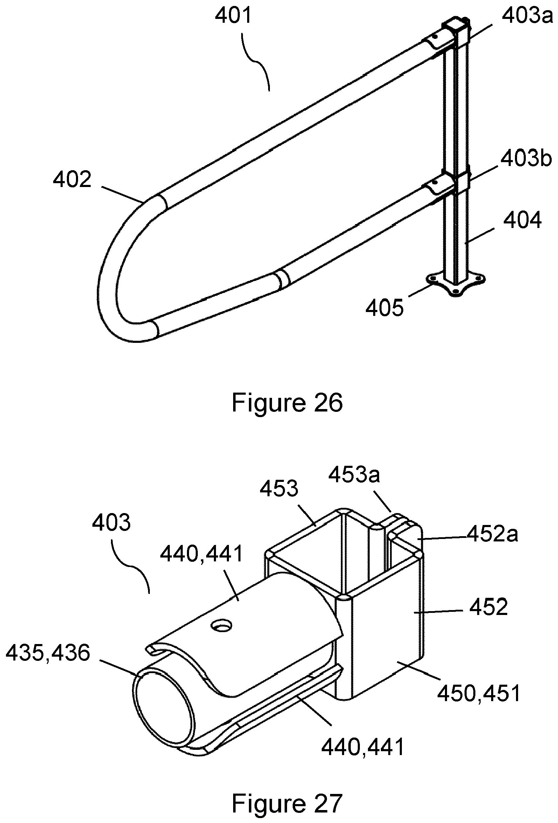

Figure 26 shows a further example cubicle system 401 according to an aspect of the invention. The cubicle system 401 comprises a rail 402 and two attachment brackets 403 for attaching the rail 402 to a structure 404. The cubicle system 401 is generally similar to the previous example, and can be used in a similar way, with similar numerals denoting similar features. For example, the rail 402 is similar to the rail 2.

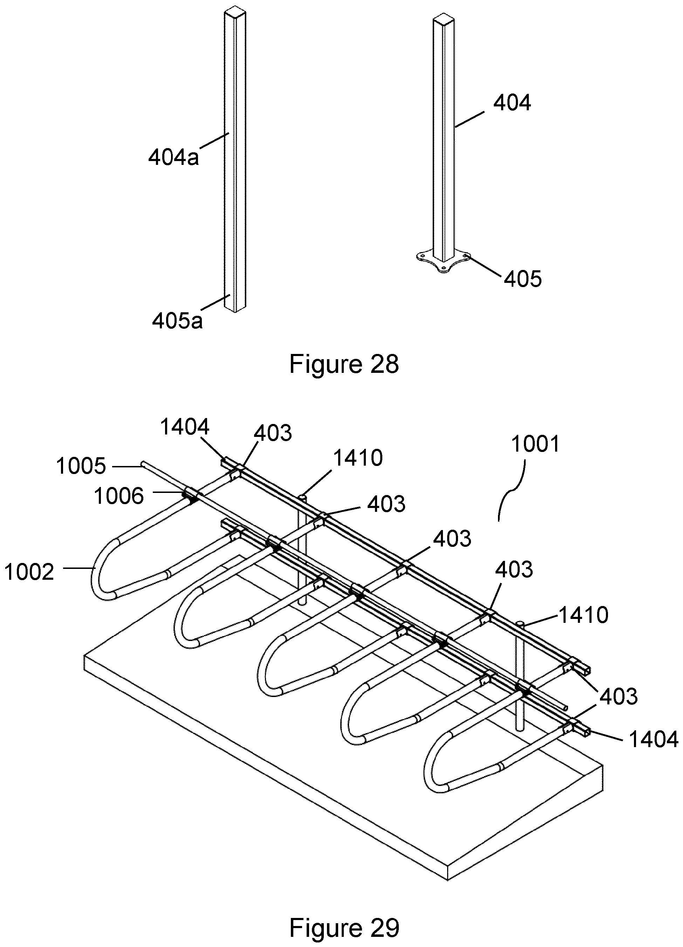

The cubicle system 401 is distinguished from the previous example cubicle system 1 by the attachment brackets 403 (i.e. upper and lower attachment brackets 403a, 403b) and the structure 404. In particular, the attachment brackets 403, one of which is shown in detail in figure 27, is adapted for attachment to the structure 404.The structure 404 extends along a generally vertical axis, in use, The structure 404 is a post having has a generally square cross section. The square cross section is advantageous since the brackets 403 are less able to rotate about the axis of the post 404, in use. The structure 404 includes a floor attachment plate 404a which facilitates attachment of the structure 404 to a floor, for example a concrete floor within an outhouse or cattle shed, whereby fixing arrangements such as bolts pass through holes in the floor attachment plate 405. In optional embodiments (see post 404a in figure 28) the structure to which the attachment brackets are attached does not include a floor attachment plate and is instead held in a vertical position, in use, by embedding a free end 405a of the post 404a in concrete.

As shown in figure 27, the attachment bracket 403 comprises a support arrangement 435 for providing internal support to the rail 402 and a rail connection arrangement 440 for securing, attaching and/or connecting the rail 402 to the attachment bracket 403. The support arrangement 435 is a locator tube 436 adapted to fit within the rail 402 at an open end of the rail 402. The rail connection arrangement 440 comprises a clamping arrangement 441 which is configured to be locatable on the outer surface of the rail 402, in use. The rail connection arrangement 440/clamping arrangement 441 are generally similar to those of the previous embodiments.

The attachment bracket 403 comprises a securement arrangement 450 for securing, attaching and/or connecting the attachment bracket 403 to the structure 404. In this case the structure 404 is a square post which extends in a vertical or substantially vertical direction from the ground/floor. The securement arrangement 450 comprises a clamping arrangement 451. The clamping arrangement 451 is configured to be locatable over the outer surface of the post 404, as shown in figure 26. The clamping arrangement 451 comprises opposing clamping members 452, 453. Each clamping member 452, 453 comprises a clamping surface configured to contact the outer surface of the post 404, in use. The clamping arrangement 451 is configured to allow the clamping members 452, 453 to be pushed together, in use. The clamping arrangement 451 can be used to clamp the attachment bracket 403 onto the outer surface of the post 404, thereby providing secure attachment of these components, in use. The opposed clamping members 452, 453 are formed from a single plate 451 which has been bent into shape and is attached to the support arrangement 435 and rail connection arrangement 440 via welding. Free ends 452a, 453a of the respective clamping members 452, 453 can be pushed together, in use, by suitable means such as bolts/nuts and/or screws to facilitate clamping.

In use, the post 404 is accommodated in a generally square channel formed by the plate 451 and between the clamping members 452, 453. To attach the attachment bracket 403 to the post 404, the post 404 is passed through the channel formed by the plate 451. Bolts are passed through aligned holes in the free ends 452a, 453a of the respective clamping members 452, 453. The bolts are tightened with nuts to push the clamping members 452, 453 together and thereby securely fix the attachment bracket 403 to the post 404. As will be appreciated, the attachment bracket 403 may be fixed to the post 404 before or after the attachment bracket 402 is attached to the rail 402, or at the same time.

The attachment bracket 403 is provided as a single part. In optional embodiments the support arrangement 435 may be provided separately to the remainder of the attachment bracket 403. The attachment bracket 403 and post 404 are formed from the same materials as those of the previous examples.

Figure 29 shows an alternative way of using the attachment bracket 403, in this case attachment to posts 1404 which extend in a horizontal direction. In figure 29 there is shown a cubicle system 1001 comprising a plurality of rails 1002 attached to two horizontal posts 1404 via attachment brackets 403 (shown in detail in figure 27). The rails 1002 are each similar to the rail 2. The horizontal posts 1404 are attached to cylindrical posts 1410 via suitable brackets (not shown). The cylindrical posts 1410 extend along a generally vertical direction and are embedded in concrete at a free end thereof. The rails 1002 are attached to the horizontal posts 1404 in a similar manner as shown in figure 26 (i.e. horizontal posts 1404 pass through the generally square channels formed by the plate 451 and between the clamping members 452, 453 of each respective bracket 403, and are clamped via bolts in the matter described above). A headrail 1005 is attached to the rails 1002 via headrail brackets 1006. The headrail 1005 and headrail brackets 1006 are similar to the previous examples 5,6 shown in e.g. figure 2.

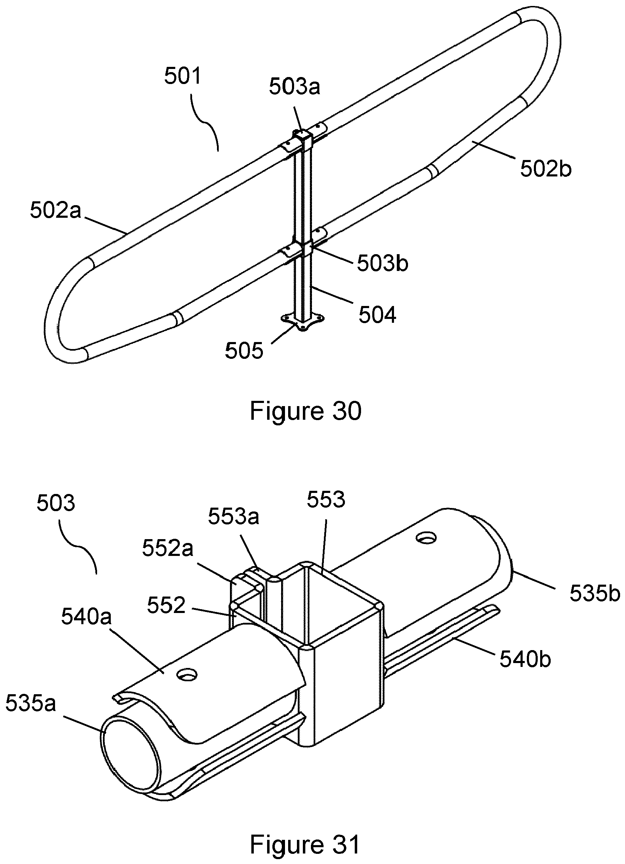

Figure 30 shows a further example cubicle system 501 according to an aspect of the invention. The cubicle system 501 comprises two rails 502 (i.e. rails 502a, 502b) and two attachment brackets 503 (i.e. upper and lower attachment brackets 503a, 503b) for attaching the rails 502 to a structure 504. The cubicle system 501 is generally similar to the previous example cubicle system 401 in a number of ways, and can be used in a similar way, with similar numerals denoting similar features. For example, each rail 502 is similar to the rail 2.

The cubicle system 501 is distinguished from the previous example cubicle system 401 by the attachment brackets 503 (i.e. upper and lower attachment brackets 503a, 503b) which are each configured for attachment to two rails 502a, 502b. In particular, the attachment brackets 503, one of which is shown in detail in figure 31, comprises two support arrangements 535a,535b for providing internal support to the rails 502a,502b and two rail connection arrangements 540a,540b for securing, attaching and/or connecting the rails 502a,502b to the attachment bracket 503. The support arrangements 535a,535b are similar to support arrangement 435 of the previous embodiment and the rail connection arrangements 540a,540b are similar to the connection arrangement 440 of the previous embodiment. The attachment bracket 503 is further distinguished from the attachment bracket 403 by the location of the free ends 552a, 553a of the respective clamping members 552, 553. In the present embodiment the free ends 552a, 553a of the respective clamping members 552, 553 are located between the support arrangements 535a,535b and rail connection arrangements 540a,540b.

The attachment bracket 503 is provided as a single part. In optional embodiments the support arrangements 535a,535b may be provided separately to the remainder of the attachment bracket 503. The attachment bracket 503 and post 504 are formed from the same materials as those of the previous examples.

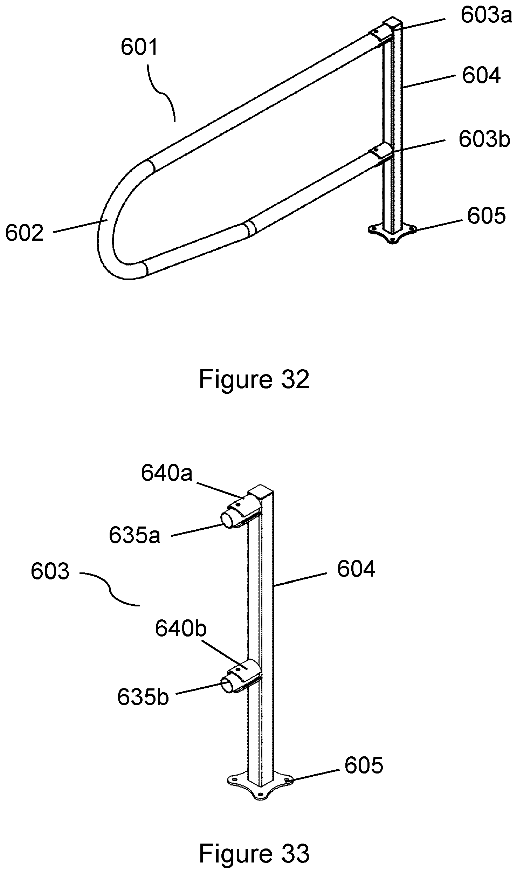

Figure 32 shows a further example cubicle system 601 according to an aspect of the invention. The cubicle system 601 comprises a rail 602 and two attachment brackets 603 for attaching the rail 602 to a structure (in this case, a floor). The cubicle system 601 is generally similar to the previous examples in a number of ways, and can be used in a similar way, with similar numerals denoting similar features. For example, the rail 602 is similar to the rail 2.

The cubicle system 601 is distinguished from the previous example cubicle system 401 shown in figure 26 by the attachment brackets 603 (i.e. upper and lower attachment brackets 403a, 403b) which are provided pre-attached to post 604 (see figure 33). In particular, the attachment brackets 603 and post 604 are welded together. The post 604 has a generally square cross section. The post 604 extends along a generally vertical axis, in use. The post 604 includes a floor attachment plate 605 which facilitates attachment of the attachment brackets 403 and post 404 to an external structure such as a floor, for example a concrete floor within an outhouse or cattle shed, whereby fixing arrangements such as bolts pass through holes in the floor attachment plate 605.

The attachment brackets 603/post 604 are provided as a single part. In optional embodiments one or both of the support arrangements 635a, 635b may be provided separately to the remainder of the attachment bracket 603/post 604. The attachment bracket 603 and post 604 are formed from the same materials as those of the previous examples.

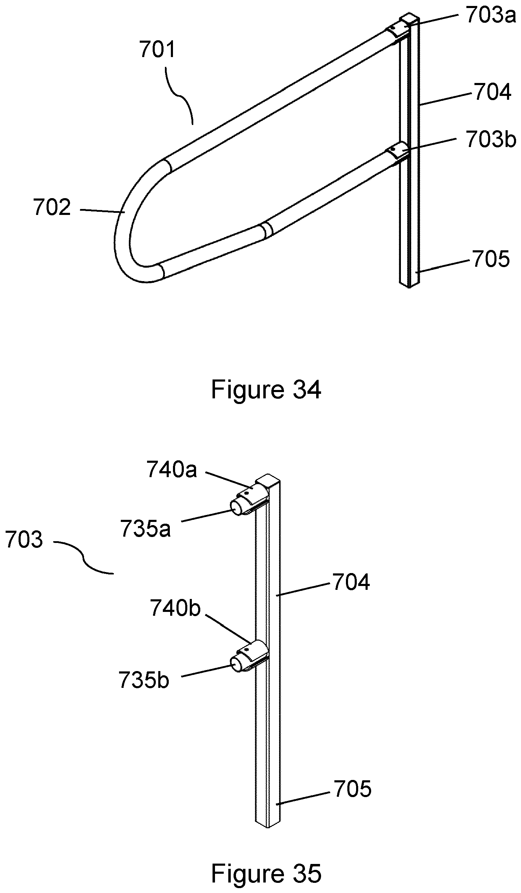

In optional embodiments (see embodiments of figures 34 and 35, in which the attachment brackets 703 and post 704 are also pre-attached via welding) the post 704 does not include a floor attachment plate and is instead held in a vertical position, in use, by embedding a free end 705 of the post 704 in concrete. While the attachment brackets 703/post 704 are provided as a single part, in optional embodiments the support arrangements 735 may be provided separately to the remainder of the attachment bracket 703/post 704. The attachment bracket 703 and post 704 are formed from the same material as those of the previous examples.

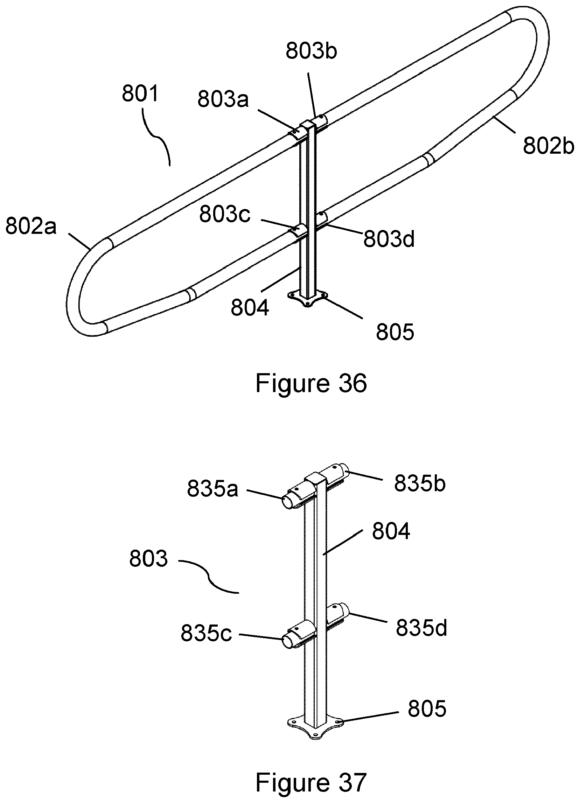

Figure 36 shows a further example cubicle system 801 according to an aspect of the invention. The cubicle system 801 comprises two rails 802 (i.e. rails 802a, 802b) and four attachment brackets 803 (i.e. attachment brackets 803a, 803b, 803c, 803d) for attaching the rails 802a,802b to a structure (in this case, a floor). The cubicle system 801 is generally similar to the previous example cubicle system 601 of figure 32, and can be used in a similar way, with similar numerals denoting similar features. For example, each rail 802 is similar to the rail 2 and each attachment bracket 803 is provided pre-attached to post 804 via welding (see figure 37).

The cubicle system 801 is distinguished from the previous example cubicle system 601 shown in figure 32 by having four attachment brackets 803 (i.e. attachment brackets 803a, 803b, 803c and 803d) attached to post 804, each of which are configured for attachment to a rail 802 at an open end of the rail 802. The attachment brackets 803/post 804 are configured to support two rails 802.

The attachment brackets 803/post 804 are provided as a single part. In optional embodiments the support arrangements 835 (i.e. support arrangements 835a,835b,835c,835d) may be provided separately to the remainder of the attachment bracket 803/post 804. The attachment bracket 803 and post 804 are formed from the same materials as those of the previous examples.

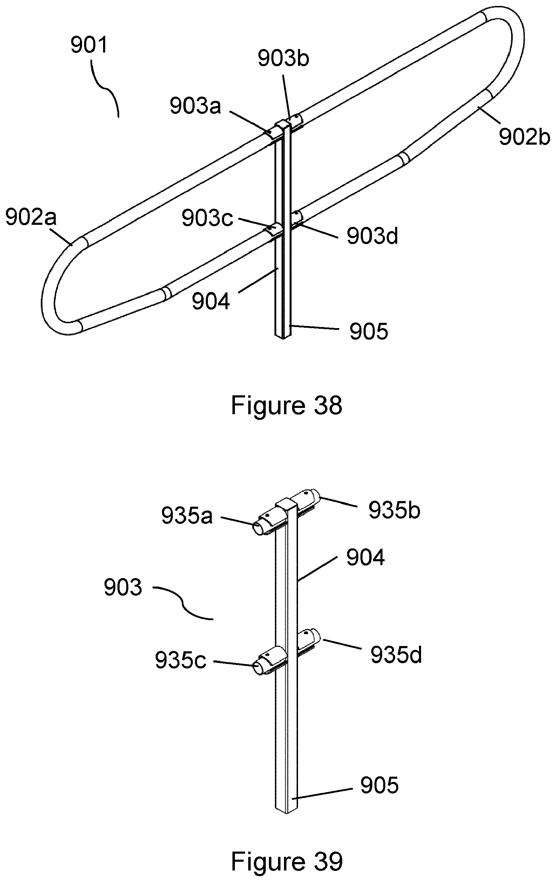

In optional embodiments (see embodiments of cubicle system 901 in figure 38 and 39, in which the attachment brackets 903 and post 904 are also pre-attached via welding) the post 904 does not include a floor attachment plate and instead is held in a vertical position, in use, by embedding a free end 905 of the post 904 in concrete. While the attachment brackets 903/post 904 are provided as a single part, in optional embodiments the support arrangements 935 (i.e. support arrangements 935a,935b,935c,935d) may be provided separately to the remainder of the attachment bracket 903/post 904. The attachment bracket 903 and post 904 are formed from the same materials as the previous examples.

As will be understood by the skilled person, the example embodiments presented above can be modified in a number of ways without departing from the scope of the invention. For example, the cubicle system 1 may comprise a plurality of rails 2, a plurality of attachment brackets 3 for each rail 2, at least two attachment brackets for each rail 2, exactly two attachment brackets for each rail 2, or exactly two attachment brackets for each pair of rails 2. The rail 2 may include one or more reinforcement members such as steel collars or e.g. steel reinforcement tubes inside the rail 2. Each attachment bracket 3,103,203,303,403,503,603,703,803,903 may be formed of three or more parts, for example the locator tube 36 may be provided separately to the remainder of the first part 31 of the attachment bracket 3 (the first part 31 may be non-unitary). The cubicle system 1 may be provided as a kit of parts comprising at least two attachment brackets 3,103,203,303,403,503,603,703,803, 903 a rail 2, a headrail bracket 6 and headrail 5. The kit of parts allows the cubicle system to be easily installed in e.g. an animal housing such as a cattle shed.

Features, integers or characteristics, compounds described in conjunction with a particular aspect, embodiment or example of the invention are to be understood to be applicable to any other aspect, embodiment or example described herein unless incompatible therewith.

## Claims

1. A cubicle system for partitioning an area, the cubicle system comprising: at least one rail; and at least one attachment bracket for attaching the at least one rail to a structure, wherein the at least one attachment bracket comprises a support means for providing internal support to the rail and a rail connection means for securing, attaching and/or connecting the rail to the at least one attachment bracket, wherein the rail connection means is configured to be locatable on an outer surface of the rail, in use.

2. A cubicle system according to claim 1, wherein the at least one rail comprises at least one open end.

3. A cubicle system according to claim 2, wherein the support means is adapted to fit within the rail at an open end of the rail.

4. A cubicle system according to any preceding claim, wherein the at least one rail is a hollow plastic tube.

5. A cubicle system according to any preceding claim, wherein the rail connection means comprises a clamping means.

6. A cubicle system according to any preceding claim, wherein the clamping means comprises two opposing clamping members configured to be pushed together and towards the support means, in use.

7. A cubicle system according to any preceding claim, wherein the at least one attachment bracket is formed of at least two separable parts.

8. A cubicle system according to claim 7, wherein a first part comprises the support means.

9. A cubicle system according to claim 8, wherein the first part comprises a stop means for limiting the distance that the support means can pass into the rail, in use.

10. A cubicle system according to any preceding claim, wherein the at least one attachment bracket comprises a securement means for securing, attaching and/or connecting the at least one attachment bracket to the structure, and preferably wherein the securement means comprises a further clamping means, a weld or a plate.

11. A cubicle system according to any preceding claim, wherein the cubicle system comprises at least one headrail for supporting the rail and at least one headrail bracket for attaching the headrail to the rail, and wherein the at least one headrail bracket comprises a shim, such as a floating curved shim.

12. A method for partitioning an area, the method comprising:
providing a cubicle system according to any preceding claim;
attaching the at least one attachment bracket to a structure; and
attaching the at least one rail to the at least one attachment bracket.

13. An attachment bracket for attaching a rail to a structure, the attachment bracket comprising: a support means for providing internal support to the rail; and a rail connection means for securing, attaching and/or connecting the rail to the at least one attachment bracket, wherein the rail connection means is configured to be locatable on an outer surface of the rail, in use

14. A rail for partitioning an area, the rail comprising an upper rail portion connected to a lower rail portion, wherein the rail is a flexible unitary plastic member for a cubicle system and wherein the rail comprises at least one open end adapted to receive a support means of an attachment bracket according to claim 13.

15. A headrail bracket for attaching a headrail to a rail, the headrail bracket comprising: a first half bracket adapted to receive a headrail which extends in a first direction; a second half bracket adapted to receive a rail which extends in a second direction; and a shim, wherein the shim is locatable between the first half bracket and the second half bracket, in use.
